Europäisches Patentamt

European Patent Office

Office européen des brevets

(19)

(11) Numéro de publication: **0 1 2 3 6 0 7**
**B1**

(12)

# FASCICULE DE BREVET EUROPEEN

(45) Date de publication du fascicule du brevet:
**27.01.88**

(21) Numéro de dépôt: **84400737.7**

(22) Date de dépôt: **12.04.84**

(51) Int. Cl.⁴: **G 21 C 3/32**

---

(54) **Dispositif anti-envol pour réacteur nucléaire.**

---

(30) Priorité: **13.04.83  FR 8306033**

(43) Date de publication de la demande:
**31.10.84 Bulletin 84/44**

(45) Mention de la délivrance du brevet:
**27.01.88 Bulletin 88/4**

(84) Etats contractants désignés:
**BE CH DE GB IT LI SE**

(56) Documents cités:
**DE - A - 2 023 587**
**DE - A - 2 644 516**
**DE - B - 2 742 946**
**FR - A - 1 340 876**
**FR - A - 1 536 257**
**FR - A - 2 326 010**
**GB - A - 2 010 569**
**GB - A - 2 104 712**
**GB - A - 2 105 095**
**US - A - 4 309 251**
**US - E - 27 173**

(73) Titulaire: **Société en nom collectif FRAMATOME et COGEMA dite "FRAGEMA", Tour Fiat 1, Place de la Coupole, F-92084 Courbevoie (FR)**

(72) Inventeur: **Leclerq, Joseph, 30, Route de Champagne, F-69370 Saint Didier au Mont d'Or (FR)**
Inventeur: **Bonnamour, Michel, 3, rue de Champagneux, F-69008 Lyon (FR)**

(74) Mandataire: **Fort, Jacques et al, CABINET PLASSERAUD 84, rue d'Amsterdam, F-75009 Paris (FR)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne les dispositifs anti-envol pour réacteur nucléaire du type comportant des assemblages combustibles accolés formant le cœur du réacteur.

Le problème de la retenue des assemblages combustibles soumis aux forces exercées par la circulation, généralement ascendante, du fluide réfrigérant, se pose pratiquement depuis la construction des premiers réacteurs et s'aggrave avec l'objectif d'augmentation de puissance qui a pour corollaire l'augmentation des débits. Des moyens extrêmement variés ont été proposés pour maintenir en place les assemblages. Le problème est compliqué du fait que les assemblages subissent des modifications dimensionnelles lors de leur séjour en réacteur et qu'en conséquence deux assemblages combustibles adjacents peuvent avoir des longueurs notablement différentes. A l'heure actuelle, la solution utilisée par l'ensemble des constructeurs de réacteurs nucléaires modérés et refroidis par circulation d'eau consiste à faire reposer les assemblages combustibles sur une plaque inférieure support de cœur, percée d'ouvertures de passage du réfrigérant et à interposer des éléments élastiques entre la pièce d'extrémité supérieure de chaque assemblage et une plaque supérieure de cœur. Ces éléments élastiques prennent appui sur la plaque supérieure de cœur et appliquent les assemblages sur la plaque inférieure de cœur en résistant à la poussée exercée par le fluide réfrigérant.

De façon générale, ces éléments élastiques sont intégrés à l'assemblage. Ils peuvent prendre la forme de lames élastiques ayant une extrémité présentant une liaison d'encastrement avec la pièce supérieure et une extrémité libre destinée à prendre appui sur la plaque supérieure de cœur. Ils peuvent être constitués par des ressorts travaillant en torsion et en flexion (FR-A 2 326 010) portés par la pièce supérieure d'assemblage. Ils peuvent être interposés entre une douille solidaire de la pièce supérieure d'assemblage et un embout coulissant d'appui contre la plaque supérieure de cœur (FR-A 2 409 576).

Le document FR-A 1 340 876 décrit un réacteur nucléaire ayant des assemblages munis d'un dispositif anti-envol comportant au moins deux jeux de moyens élastiques destinés à exercer sur les assemblages adjacents un effort de retenue. Les moyens élastiques sont constitués par des pinces à ressort s'engageant dans des cavités formées dans certains des éléments adjacents et n'exercent qu'un effort d'accrochage. L'affaiblissement des pinces sous irradiation peut se traduire par une libération complète de ces éléments adjacents, ce qui présente un grave inconvénient.

De façon générale, toutes les solutions évoquées ci-dessus présentent des inconvénients. En particulier, elles accroissent la complexité de l'assemblage de combustible. Leur détérioration sous irradiation oblige à des interventions complexes sur ceux des assemblages irradiés qui doivent subir un nouveau passage en réacteur ou la mise au rebut de ces assemblages. L'encombrement des ressorts et le surdimensionnement de la pièce d'extrémité supérieure qu'ils entraînent rétrécissent la section de passage du fluide réfrigérant. Les variations de longueur des assemblages rendent difficile la réalisation de ressorts capables d'appliquer les assemblages sur la plaque inférieure support de cœur en toute circonstance. Enfin, ces ressorts peuvent gêner l'introduction, dans la pièce supérieure d'assemblage, d'un grappin de manutention.

L'invention vise à fournir un réacteur dont les assemblages sont munis d'un dispositif anti-envol répondant mieux que ceux antérieurement connus aux exigences de la pratique. Elle concerne les réacteurs nucléaires du type dont le cœur est constitué par des assemblages combustibles accolés dont certains sont équipés d'éléments non déplaçables dans leurs tubes de réception pendant le fonctionnement, tels que sources neutroniques, crayons contenant du poison consommable et bouchons. Ces éléments sont généralement portés par un organe associé à l'assemblage. En particulier, il est de pratique courante de prévoir des éléments constitués par des crayons neutrophages assemblés en groupe sur un organe fréquemment dénommé «araignée» pour constituer une grappe de commande dans laquelle la répartition des crayons est optimisée pour qu'ils exercent également une action sur les assemblages entourant celui qui est équipé de la grappe. D'autres assemblages peuvent être munis de grappes d'arrêt, d'autres de grappes de sources neutroniques de démarrage, d'autres encore de grappes de poison consommable.

Suivant un premier aspect de l'invention, le réacteur est conforme à la revendication 1.

L'organe comporte avantageusement une première partie prenant appui sur l'assemblage qu'il équipe et munie desdits éléments, ainsi qu'une seconde partie pouvant coulisser verticalement sur la première, munie des moyens élastiques et recevant la poussée de la structure commune pour appliquer les moyens élastiques contre les assemblages adjacents. Les pièces et/ou les moyens élastiques seront prévus pour que les moyens élastiques, généralement constitués par des ressorts à lame, soient inscrits dans la section droite de l'assemblage jusqu'à enfoncement par la structure commune. Un ressort supplémentaire interposé entre les deux pièces pourra jouer le rôle d'anti-envol pour l'assemblage muni de l'organe.

On voit que le dispositif utilisé dans un réacteur suivant l'invention présente une grande souplesse d'emploi, étant applicable quelle que soit la section droite de l'assemblage (généralement carrée ou hexagonale), supprime la difficulté d'introduction d'un grappin provoquée par les dispositifs classiques, autorise un remplacement rapide des éléments élastiques endommagés, permet d'écarter le risque de mise au rebut d'un assemblage combustible provoqué par la détérioration d'un dispositif anti-envol incorporé et, comme on le verra plus loin, laisse une plus grande latitude dans la répartition des tubes de réception d'éléments appartenant au squelette de l'assemblage.

L'invention sera mieux comprise à la lecture de la description qui suit de modes particuliers de réalisation, donnés à titre d'exemples non limitatifs. La description se réfère aux dessins qui l'accompagnent, dans lesquels:

– la fig. 1 est une vue de dessus, en coupe partielle, montrant un dispositif anti-envol placé sur un assemblage dans un réacteur selon l'invention,
– la Figure 2 est une vue en coupe du dispositif de la Figure 1, les organes étant représentés dans la position qu'ils occupent lors de l'introduction;
– les Fig. 3 et 4, similaires à la Fig. 2, sont des demi-coupes montrant la disposition prise par les composants lors de la venue en contact des ressorts avec les éléments adjacents;
– la Fig. 5, similaire à la Fig. 3, montre une variante de réalisation des ressorts;
– les Fig. 6 et 7, similaires aux fig. 2 et 3, montrent une variante de réalisation des composants,
– les Fig. 8 et 9 montrent très schématiquement deux autres formes possibles de mise en œuvre de l'invention.

L'invention sera essentiellement décrite dans son application à des assemblages combustibles de réacteur nucléaire du genre décrit dans le document FR-A 1 536 257, à l'exception de la pièce d'extrémité supérieure qui, dans le cas de l'invention, peut se réduire à une plaque tubulaire adaptatrice munie des tubes-guides et d'un pommeau de manutention. Ce document décrit un assemblage constitué par un faisceau de crayons contenant du matériau fissile, crayons supportés par un squelette pour former un assemblage de section carrée. Le squelette est composé de pièces d'extrémité supérieure et inférieure munies d'orifices de passage du fluide réfrigérant et reliées par des tubes qui assurent la cohésion et la rigidité mécanique de l'assemblage. Les assemblages constituent, par leur juxtaposition, le cœur du réacteur. Ils reposent sur une plaque inférieure support de cœur possédant également des ouvertures de passage du fluide réfrigérant. Au-dessus des assemblages est placée une plaque de cœur, percée d'ouvertures d'échappement du fluide chaud.

Dans certains des assemblages du cœur, les tubes sont destinés à recevoir des crayons contenant un absorbant neutronique, nécessaires à la commande de la réactivité du cœur, tous les crayons d'un même assemblage formant une grappe déplaçable en bloc par un organe couramment dénommé «araignée». Les tubes d'autres assemblages sont prévus pour recevoir des grappes d'éléments non déplaçables lors du fonctionnement, tels que des crayons contenant un poison consommable utilisé pour combattre l'excès de réactivité du cœur, des bouchons dont le rôle est de fermer l'extrémité des tubes non utilisés, ou des sources de neutrons permettant d'atteindre la criticité.

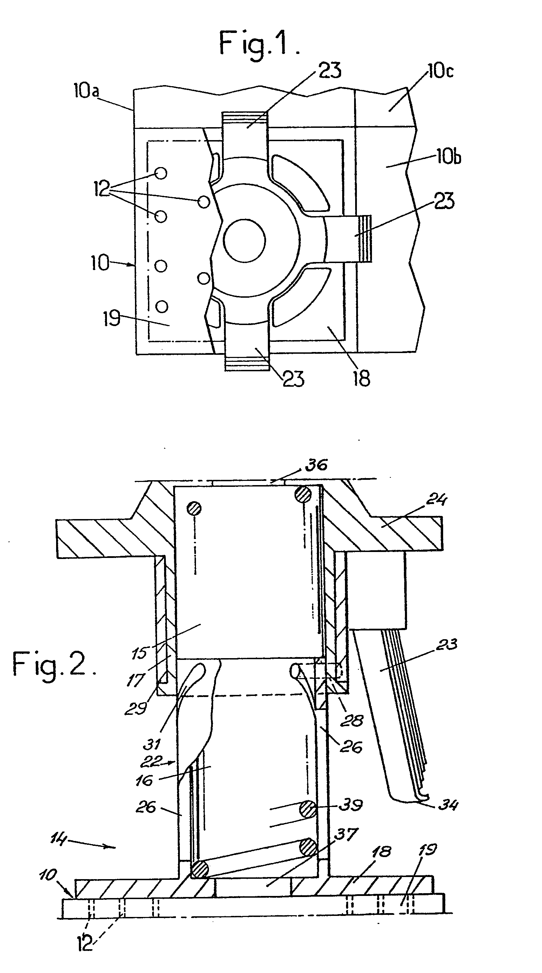

La Fig. 1 montre, en vue de dessus, un assemblage 10 dont on supposera que ses tubes guides 12 sont destinés à recevoir des éléments fixes, et une fraction de trois assemblages adjacents 10a, 10b et 10c, les assemblages 10a et 10b devant recevoir les crayons mobiles de grappes de commande non représentées. Ces assemblages peuvent avoir la constitution générale décrite dans le document FR-A 1 536 257 déjà mentionné, exception faite de la pièce d'extrémité supérieure.

L'assemblage 10 montré en Fig. 1 à 3 est représenté équipé d'un organe 14 muni tout à la fois de moyens élastiques destinés à participer à l'antienvol des éléments adjacents 10a et 10b et d'éléments non déplaçables lors du fonctionnement, qu'on supposera être des bouchons d'obturation des tubes 12. Pour cette raison, l'organe 14 sera maintenant appelé «araignée», du fait de sa forme. Cette araignée 14 porte une grappe de bouchons répartis de façon à s'introduire dans les tubes guides 12, répartis dans le réseau de crayons de combustible (Fig. 2).

Sur la Fig. 2, l'araignée a été représentée dans la position qu'elle présente en fin d'introduction des bouchons dans l'assemblage 10. Cette araignée 14 comprend deux parties 15 et 16, de forme générale cylindrique, coaxiales, montées à frottement doux l'une sur l'autre de façon à pouvoir coulisser verticalement. La partie inférieure 16 présente une embase 18 à laquelle sont fixés les bouchons, non représentés, destinés à s'engager dans les tubes guides 12. Cette embase 18 vient reposer, en fin d'introduction, sur la pièce adaptatrice supérieure 19 de l'assemblage 10.

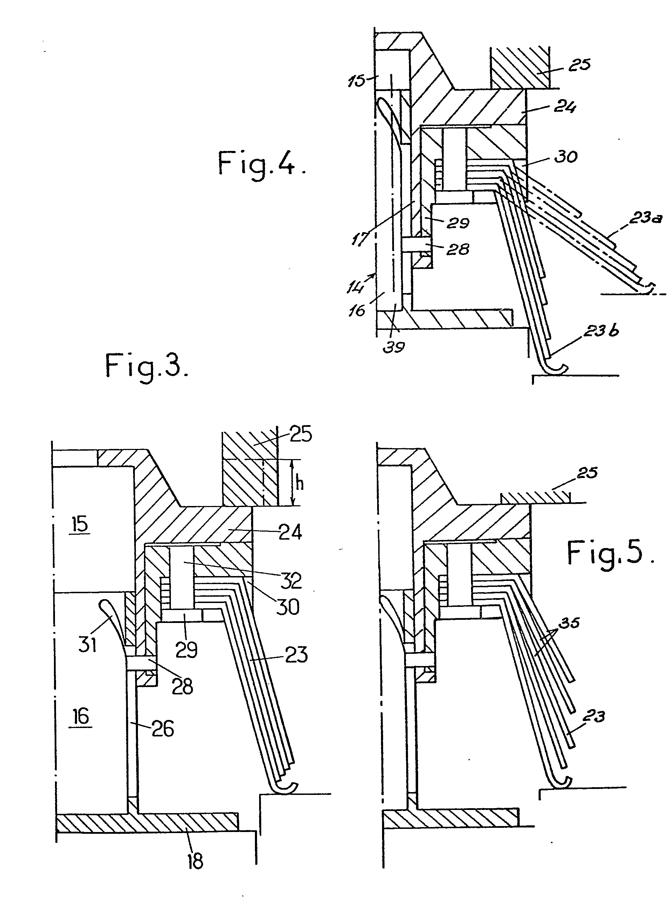

La partie supérieure 15 de l'araignée présente de son côté une virole 17 dont la face interne cylindrique est prévue pour coulisser à frottement doux sur une portion tubulaire 22 de la partie inférieure 16. La partie 15 est munie de ressorts 23 destinés à prendre appui sur les assemblages combustibles adjacents tels que 10a et 10b. Pour plus de simplicité, un seul ressort 23 a été montré sur la Fig. 2. Mais l'araignée peut comporter un nombre quelconque de ressorts, de un à quatre, suivant le nombre d'assemblages combustibles adjacents à retenir. Les ressorts 23 sont portés par une bride 24 dont la face supérieure plane est destinée à servir d'appui à la plaque supérieure de cœur 25 (Fig. 3). Sous l'action de cette plaque 25, la partie supérieure 15 se déplace vers le bas par rapport à la partie inférieure 16. Dans ce déplacement, la virole 17 de la partie supérieure 15 est guidée par des moyens d'orientation des deux parties l'une par rapport à l'autre. Dans le mode d'exécution montré en Fig. 2 et 3, ces moyens comprennent plusieurs fentes 26 ménagées dans la portion tubulaire de la partie inférieure 16, régulièrement réparties angulairement autour de l'axe vertical de l'araignée, coopérant chacune avec une goupille 28 solidaire de la virole 17 pour constituer un clavetage coulissant. Ces goupilles peuvent en même temps solidariser la virole 17 d'un manchon 29 qui l'entoure et qui est muni de logements 30 de réception et de positionnement des ressorts 23. Ces derniers sont fixés au manchon 29, par exemple à l'aide de vis 32.

Les Fig. 2 et 3 montrent que les fentes 26 sont rectilignes et parallèles à l'axe dans leur partie basse, sur les trois quarts environ de leur longueur. Mais la partie haute 31 de ces fentes est hélicoïdale de façon que l'enfoncement de la partie supérieure 15 à partir de la position haute où elle est montrée en Fig. 2 provoque une rotation de la partie supérieure 15 qui, dans le cas d'un assemblage à section carrée, sera de l'ordre de 45°.

L'araignée 14 est mise en place sur un assemblage en utilisant un outil de manutention classique, qui peut par exemple saisir la partie supérieure 15. Lorsque l'embase 18 vient au contact de la pièce adaptatrice supérieure 19, les éléments sont dans la position montrée en Fig. 2. Puis, lorsqu'une poussée axiale dirigée vers le bas est exercée sur la partie supérieure 15, par exemple par la plaque supérieure 25, cette partie supérieure 15 descend en tournant. Les ressorts qui, dans leur position initiale, ne débordent pas des dimensions en plan de l'assemblage combustible 10 (Fig. 2), prennent une nouvelle orientation où ils se placent symétriquement par rapport au plan médian des assemblages adjacents (Fig. 1 et 3). La zone de contact 34 d'un premier ressort vient en appui sur la pièce adaptatrice supérieure de celui des assemblages adjacents dont la plaque est la plus haute, 10b par exemple (fig. 3). Puis, au fur et à mesure que le déplacement vers le bas de la pièce supérieure se poursuit, les autres ressorts viennent en appui à leur tour.

Lorsque la plaque de cœur 25 est descendue à sa position définitive, tous les ressorts 23 maintiennent les assemblages sur lesquels ils s'appuient. On a montré sur la Fig. 4 deux états extrêmes que peut prendre un ressort. L'état indiqué en 23a (tracé en traits mixtes) correspond au maintien d'un assemblage ayant subi plusieurs cycles et un grandissement qui lui donne une dimension longitudinale supérieure à celle de l'assemblage 10. Le tracé en traits pleins indiqué par 23b correspond au cas d'un assemblage neuf, alors que l'assemblage 10 a lui-même subi un certain grandissement au cours d'un cycle précédent.

La fig. 5, similaire à la Fig. 4, montre une variante de réalisation dans laquelle le ressort 23 est encore constitué de plusieurs lames, mais qui sont écartées lorsque le ressort est libre, alors que ces lames 35 sont jointives dans le cas illustré en Fig. 2 à 4. On rend ainsi l'action du ressort 23 plus progressive. De plus, on compense ainsi l'augmentation du bras de levier de la force d'appui sur le ressort: dans la position initiale du ressort 23, en traits pleins sur la Fig. 5, la lame au contact est très raide étant donné qu'elle fait un angle faible sur la verticale. Cette raideur diminue par augmentation de la flèche au fur et à mesure de la flexion de lame. Mais la diminution corrélative de l'effort est rattrapée par l'action de la lame suivante, et ainsi de suite.

L'araignée peut être prévue pour combattre également l'envol de l'assemblage 10 sur lequel elle est montée. Pour cela, il suffit de placer un ressort travaillant en compression entre les parties 15 et 16. Dans le cas illustré en Fig. 2, ce ressort 39 est placé dans la partie centrale de l'araignée 14, entre les deux rebords terminaux appartenant, l'un à la partie supérieure 15, l'autre à la partie inférieure 16. Ce ressort tend de plus à amener les deux parties dans la disposition relative montrée en Fig. 2 lors de la manutention, donc à maintenir les ressorts 23 en position effacée. Les rebords internes d'appui du ressort 39 laissent subsister des ouvertures centrales 36 et 37 de circulation du réfrigérant à la sortie du cœur. Des ouvertures supplémentaires sont avantageusement prévues dans la bride 24 pour offrir une section de passage supplémentaire. Ces ouvertures peuvent être de dimension suffisante pour que la perte de charge à la sortie de chaque assemblage soit nettement plus faible que dans les assemblages munis de dispositifs d'anti-envol classiques, et cela d'autant plus que la pièce adaptatrice supérieure de l'assemblage est nettement allégée.

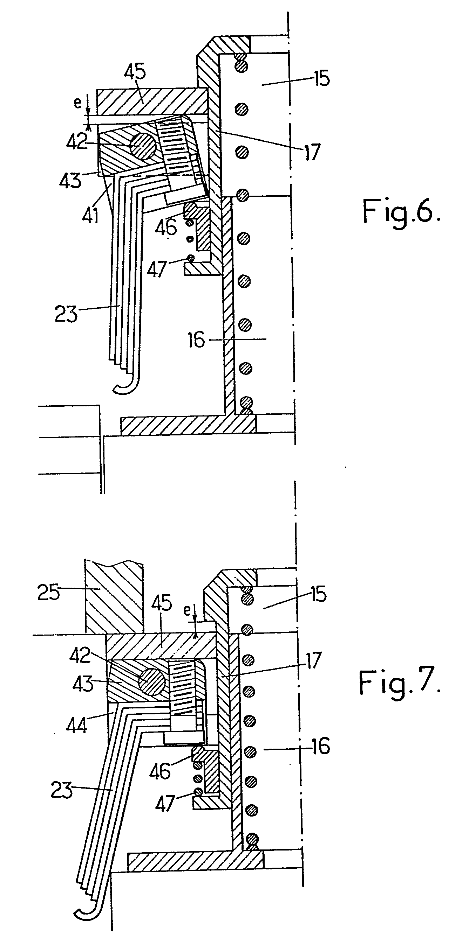

Dans la variante de réalisation de l'invention montrée en Fig. 6 et 7, où les organes correspondant à ceux des figures précédentes sont désignés par le même numéro de référence, le déplacement des ressorts entre la position espacée et la position de venue en contact ne s'effectue plus par rotation relative des parties 15 et 16, mais par basculement autour d'un axe perpendiculaire à l'axe longitudinal de l'araignée. Chacun des ressorts 23 est porté par une pièce 41 munie d'un arbre 42 dont les extrémités s'engagent dans une couronne 43 solidaire de la virole 17. L'arbre constitue un axe de rotation orthogonal à l'axe de l'araignée 14. Une bague 45 est montée flottante sur la virole 17 entre la couronne 43 et un épaulement terminal de la virole. Un poussoir annulaire 46, monté sur la virole 17, est appuyé contre les pièces 41 par un ressort de compression 47. Ce poussoir tend à faire basculer les pièces 43 en repoussant la bague 45 vers la position de butée où elle est représentée en Fig. 6. L'amplitude du débattement e de la bague 45 entre ces deux positions terminales est telle que, lorsque la bague 45 est amenée en appui contre la couronne 43, elle fait basculer les pièces 41 suffisamment pour amener les ressorts en saillie, comme indiqué sur la Fig. 7. Ce basculement intervient sous l'action de la plaque supérieure de cœur 25 lors de l'enfoncement de cette dernière. La bague 45 et la couronne 43 peuvent être ajourées pour offrir un passage au réfrigérant.

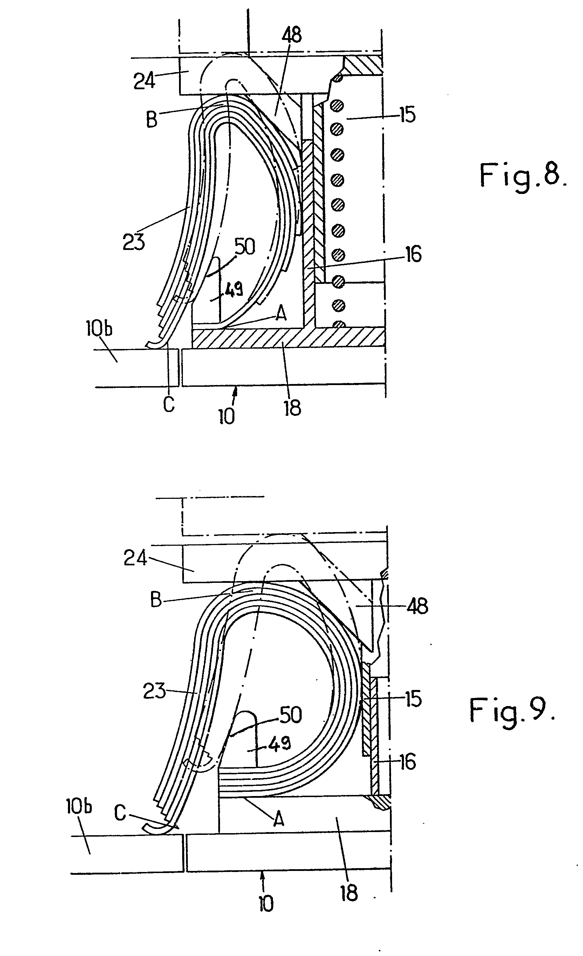

Dans la variante de réalisation montrée en Fig. 8 et 9, les ressorts 23 sont déplacés de la position rétractée à la position déployée au-dessus des assemblages adjacents par déformation lors du rapprochement des parties 15 et 16. Ces ressorts 23 sont représentés sous forme d'un jeu de lames repliées étagées (Fig. 8) ou de même longueur (Fig. 9) dont une extrémité est fixée à la plaque 18 qui porte les crayons.

Sur la Fig. 8 par exemple, on a montré en traits mixtes la position libre d'un des ressorts 23. La partie supérieure 15 est munie de coins 48 placés au droit du coude supérieur des ressorts. Lorsque ces coins 48 s'abaissent en même temps que la partie 15, en passant dans des fentes prévues à cet effet de la partie inférieure 16, ils amènent progressivement les ressorts 23 de la position montrée en tirets jusqu'à la position nécessaire pour rattraper la différence de hauteur entre l'assemblage 10 et l'assemblage adjacent 10b à retenir.

Afin de permettre un positionnement immédiat du ressort 23 sur l'assemblage adjacent 10b, un talon 49 comportant une surface 50 en forme de chanfrein guidera la lame intérieure du ressort 23.

De façon avantageuse, les talons 49 seront munis d'un alésage interne dans lequel sera disposé un dispositif de blocage des lames du ressort 23 sur la pièce 18. Ces dispositifs de blocage peuvent être constitués par une vis comportant une virole dont la déformation dans des gorges prévues dans l'alésage permet le blocage de la vis en rotation et la rend imperdable.

Dans cette variante, la fonction anti-envol n'est assurée que par déformation (c'est-à-dire sans pivotement ni basculement de l'ensemble ressort) de l'ensemble des lames qui travaille en flexion entre les repères A et B, points de contact respectifs du ressort et des parties 16 et 15, et agit comme bras de levier entre les repères B et C, points de contact respectifs de la partie 15 recevant la poussée de 24 et de l'assemblage adjacent.

Du fait que la zone délimitée par A et B travaille en flexion, il y a retrait complet de la zone délimitée par BC lorsque les parties 15 et 16 sont éloignées, c'est-à-dire lorsqu'aucune poussée ne s'exerce sur 15; les ressorts 23 ne débordent alors pas des dimensions en plan de l'assemblage combustible équipé.

De même, les talons 49 empêchent, dans cette position, le risque de déplacement de la partie BC vers l'intérieur de la boucle AB.

On voit que l'invention permet d'écarter la gêne entraînée, dans la manutention des assemblages combustibles suivant l'art antérieur, du fait des ressorts portés par les pièces d'extrémité supérieures, permet une meilleure utilisation des ressorts dont la durée de vie n'est pas liée à la durée de vie des assemblages, autorise un remplacement rapide des ressorts éventuellement endommagés, supprime le problème du remplacement des ressorts endommagés sur des assemblages à réintroduire en réacteur. Elle offre encore un avantage supplémentaire concernant la disposition possible des tubes guides: dans les assemblages actuels en effet, l'encombrement de la pièce d'extrémité supérieure interdit de placer les tubes guides à proximité immédiate de la périphérie de l'assemblage. L'invention écarte dans une large mesure cette limitation et permet de rapprocher les tubes guides de la périphérie de l'assemblage, ce qui permet d'homogénéiser le flux neutronique dans le réacteur en permettant à l'antiréactivité des crayons des grappes de commande de s'exercer davantage sur les assemblages adjacents équipés, eux, de grappes de bouchons. Cette plus grande efficacité sur les assemblages adjacents peut permettre de diminuer le nombre de grappes de contrôle requis.

Lorsque l'on souhaite diminuer le plus possible l'espace compris entre l'extrémité haute des assemblages, il est possible d'indenter la plaque supérieure de cœur 25, comme indiqué en traits mixtes sur la Fig. 3. On abaisse ainsi de h le niveau de la plaque de cœur auquel s'exerce la force d'anti-envol. Ce changement de niveau permet d'augmenter la hauteur active de combustible à encombrement égal de la cuve ou de diminuer la hauteur de cuve à hauteur active égale. Le même résultat pourrait être atteint par une forme en escalier de la bride 24 ou l'emploi de leviers.

## Revendications

1. Réacteur nucléaire comportant des assemblages combustibles juxtaposés, dont certains sont équipés d'un dispositif anti-envol comportant au moins deux jeux de moyens élastiques destinés à exercer sur les assemblages adjacents un effort de retenue, caractérisé en ce que les assemblages équipés d'un dispositif anti-envol sont aussi équipés d'éléments non déplaçables dans leur tube guide de réception pendant le fonctionnement et portés par un organe (14) insérable tel qu'une grappe de crayons ou «araignée», contenant par exemple un absorbeur de neutrons, déplaçable en bloc et en ce que les moyens élastiques (23) sont portés par ledit organe (14) et prévus pour transmettre auxdits assemblages (10a, 10b) adjacents une poussée verticale provenant d'une structure supérieure (25) commune aux assemblages.

2. Réacteur selon la revendication 1, caractérisé en ce que ladite structure supérieure est constituée par la plaque supérieure de cœur (25).

3. Réacteur selon la revendication 1 ou 2, caractérisé en ce que ledit organe (14) comprend une première partie (16) prenant appui sur l'assemblage équipé (10) et munie desdits éléments et une seconde partie (15) pouvant coulisser verticalement sur la première, munie des moyens élastiques (23) et recevant la poussée de la structure commune (25) pour appliquer les moyens élastiques contre lesdits assemblages adjacents.

4. Réacteur selon la revendication 3, caractérisé en ce que lesdites parties (15, 16) et les moyens élastiques sont prévus pour que ces derniers soient inscrits dans la section droite de l'assemblage (10) jusqu'à enfoncement par la structure commune (25) provoquant le déploiement des moyens élastiques.

5. Réacteur selon l'une quelconque des revendications précédentes, caractérisé en ce que les moyens élastiques sont constitués par des ressorts à lame (23).

6. Réacteur selon l'une quelconque des revendications précédentes, caractérisé en ce que ledit organe (14) contient un ressort (39) de transmission de l'effort exercé sur la structure commune à l'assemblage (10) équipé de l'organe.

7. Réacteur selon la revendication 3, caractérisé en ce que que la partie (15) portant les moyens élastiques (23) présente un clavetage (28) coulissant sur l'autre partie, provoquant la rotation de la partie (15) portant les moyens élastiques au début de sa descente sous l'action de la structure commune (25) de façon à faire tourner lesdits moyens élastiques autour de l'axe dudit organe d'une position où ils sont inscrits dans la section droite de l'assemblage à une position où ils font saillie en dehors (Fig. 3–5).

8. Réacteur selon la revendication 3, caractérisé en ce que chacun des moyens élastiques (23) est monté sur la pièce (15) qui le porte par un arbre (42) lui permettant de tourner autour d'un axe perpendiculaire à l'axe de l'organe d'une position effacée où tend à l'amener un ressort de rappel (47) à une position en saillie, sous l'action de la structure commune (Fig. 6, 7).

9. Réacteur selon la revendication 3, caractérisé en ce que les moyens élastiques comprennent des ressorts (16) repliés en boucle dont une extrémité est fixée sur la première partie et dont une partie intermédiaire est prévue pour recevoir la poussée de surfaces de guidage (50) de la seconde partie et de coins (48) de déploiement (Fig. 8, 9).

**Patentansprüche**

1. Kernreaktor mit nebeneinander angeordneten Brennelementbündeln, wovon einige mit einer Niederhaltungsvorrichtung ausgerüstet sind, die mindestens zwei Sätze von elastischen Mitteln zum Halten der benachbarten Bündel umfasst, dadurch gekennzeichnet, dass die mit der Niederhaltungsvorrichtung ausgerüsteten Brennelementbündel auch mit Elementen ausgerüstet sind, die während des Betriebs in ihrem Aufnahmeführungsrohr nicht beweglich sind, von einem Organ (14) getragen werden, das wie ein Stiftbündel oder eine «Spinne» eingeführt werden kann, beispielsweise einen Neutronenabsorber enthält und als Block bewegt werden kann, die elastischen Mittel (23) von dem Organ (14) getragen werden und so ausgebildet sind, dass sie auf die benachbarten Brennelementbündel (10a, 10b) einen vertikalen Schub, der von einer darüber angeordneten, allen Bündeln gemeinsamen Struktur (25) ausgeht, übertragen.

2. Reaktor nach Anspruch 1, dadurch gekennzeichnet, dass die darüber angeordnete Struktur aus der oberen Kernplatte (25) besteht.

3. Reaktor nach Anspruch 1 oder 2, dadurch gekennzeichnet, dass das Organ (14) einen ersten, sich auf dem ausgerüsteten Brennelementbündel (10) stützenden und mit den Elementen versehenen Teil (16) und einen zweiten Teil (15) umfasst, der vertikal über den ersten Teil gleiten kann, mit den elastischen Mitteln (23) ausgerüstet ist und den Schub der gemeinsamen Struktur (25) zum Anlegen der elastischen Mittel an die benachbarten Brennelementbündel aufnimmt.

4. Reaktor nach Anspruch 3, dadurch gekennzeichnet, dass die Teile (15, 16) und die elastischen Mittel so ausgebildet sind, dass die elastischen Mittel im Querschnitt des Brennelementbündels (10) bis zum Betätigen durch die gemeinsame Struktur (25), die das Entfalten der elastischen Mittel verursacht, angeordnet sind.

5. Reaktor nach einem der vorstehenden Ansprüche, dadurch gekennzeichnet, dass die elastischen Mittel aus Blattfedern (23) bestehen.

6. Reaktor nach einem der vorstehenden Ansprüche, dadurch gekennzeichnet, dass das Organ (14) eine Übertragungsfeder (39) für die Belastung enthält, die auf die Struktur, die dem mit dem Organ ausgerüsteten Brennelementbündel (10) gemeinsam ist, ausgeübt wird.

7. Reaktor nach Anspruch 3, dadurch gekennzeichnet, dass der Teil (15) mit den elastischen Mitteln (23) eine über den anderen Teil gleitende Keilverbindung aufweist, wobei eine Drehung des Teils (15) mit den elastischen Mitteln am Anfang seines Abstiegs unter der Wirkung der gemeinsamen Struktur (25) hervorgerufen wird, so dass die elastischen Mittel um die Achse des Organs von einer Stellung, in der sie im Querschnitt des Brennelementbündels angeordnet sind, in eine Stellung gedreht werden, in der sie nach aussen ragen (Fig. 3 bis 5).

8. Reaktor nach Anspruch 1, dadurch gekennzeichnet, dass jedes der elastischen Mittel (23) auf dem Teil (15) über eine Welle (42) angebracht ist, wodurch es um eine zur Achse des Organs senkrechten Achse unter der Wirkung der gemeinsamen Struktur, aus einer untergeordneten Stellung, in die es eine Rückholfeder (47) zurückholt, in eine herausragende Stellung gedreht werden kann (Fig. 6, 7).

9. Reaktor nach Anspruch 3, dadurch gekennzeichnet, dass die elastischen Mittel als Schleife gebogene Federn (16) umfassen, deren ein Ende am ersten Teil befestigt ist und deren Mittelteil so ausgebildet ist, dass er den Schub der Führungsflächen (50) des zweiten Teils und der Ausbreitungskeile (48) aufnimmt (Fig. 8, 9).

**Claims**

1. Nuclear reactor comprising fuel assemblies located side-by-side, some of which are provided with a hold down device having at least two sets of resilient means for exerting on the adjacent assemblies a hold down force, characterized in that the assemblies provided with a hold down device are also provided with elements not displaceable in their receiving guide tubes during operation and carried by an insertable unit (14), such as a rod cluster or «spider», containing for instance neutron absorbent and movable as a whole and in that the resilient means (23) are carried by said unit (14) and are arranged for transferring a vertical thrust to said adjacent assemblies (10a, 10b) from an upper structure (25) which is common to the assemblies.

2. Reactor according to claim 1, characterized in that said upper structure consists of the upper core plate (25).

3 Reactor according to claim 1 or 2, characterized in that said unit (14) has a first part (16) which bears against the equipped assembly (10) and is provided with said elements and a second part (15) vertically slidable onto the first, provided with the resilient means (23) and receiving the thrust of the common structure (25) for applying the resilient means against said adjacent assemblies.

4. Reactor according to claim 3, characterized in that said parts (15, 16) and the resilient means are so arranged that the latter are wholly contained within the cross-section of the assembly (10) until they are forced down by the common structure (25) which spreads apart the resilient means.

5. Reactor according to any one of the preceding claims, characterized in that the resilient means consist of leaf springs (23).

6. Reactor according to any one of the preceding claims, characterized in that said unit (14) includes a spring (39) for transmitting the thrust exerted on the common structure to that assembly (10) which is provided with the unit.

7. Reactor according to claim 3, characterized in that the part (15) which carries the resilient means (23) has a slidable non-rotatable connection (28) with the other part, thereby privoting the part (15) which carries the resilient means at the beginning of the downward movement under the action of the common structure for rotating said resilient means about the axis of said unit from a position where they are entirely within the cross-section of the assembly to a position where they project out of the cross-section (Fig. 3–5).

8. Reactor according to claim 3, characterized in that each of the resilient means (23) is connected to the part (15) which carries it via a shaft (42) allowing it to rotate about an axis perpendicular to the axis of the unit, from a retracted position toward which it is biassed by a return spring (47) to a projected position, under the action of the common structure (Fig. 6, 7).

9. Reactor according to claim 3, characterized in that the resilient means comprises springs (16) folded into a loop, one end of which is secured onto the first part and an intermediate part of which is arranged for receiving the thrust of guiding surfaces (50) of the second part and of spreading wedges (48) (Fig. 8, 9).

# Fig.1.

# Fig.2.

0 123 607

Fig.4.

Fig.3.

Fig.5.

Fig.6.

Fig.7.

Fig.8.

Fig.9.